# EUROPÄISCHE PATENTSCHRIFT

(11) **EP 1 031 756 B1**
(45) Veröffentlichungstag und Bekanntmachung des Hinweises auf die Patenterteilung: **26.07.2006**
(21) Anmeldenummer: 00102498.3
(22) Anmeldetag: 05.02.2000
(51) Int. Cl.: F16F 9/05, B60G 11/28

(54) **Befestigung eines Luftfeder-Rollbalges an einem Stützteil**
Fastening of the rolling diaphragm of an air spring on a supporting member
Fixation d'un soufflet roulant d'un ressort pneumatique sur un élément de support

(30) Priorität: 23.02.1999 DE 19907656
(43) Veröffentlichungstag der Anmeldung: 30.08.2000
(73) Patentinhaber: Bayerische Motoren Werke Aktiengesellschaft, 80809 München (DE); Vibracoustic GmbH & Co. KG, 69469 Weinheim (DE)
(72) Erfinder: Joseph, Adrian, 85276 Pfaffenhofen (DE); Sonnak, Ulrich, 21075 Hamburg (DE)

(56) Entgegenhaltungen:
- DE-A- 19 720 776
- DE-C- 19 607 804
- PATENT ABSTRACTS OF JAPAN vol. 004, no. 105 (M-023), 26. Juli 1980 (1980-07-26) -& JP 55 063027 A (SUMITOMO METAL IND LTD;OTHERS: 01), 12. Mai 1980 (1980-05-12)

## Beschreibung

Die Erfindung betrifft die Befestigung eines Luftfeder-Rollbalges an einem Stützteil, mit den im Oberbegriff des Patentanspruches 1 angegebenen Merkmalen.

Eine derartige Befestigung eines Luftfeder-Rollbalges ist in der DE 196 07 804 C1 vorgesehen, bei der die an einer Fahrzeugachse eines Kraftfahrzeugs verwendete Luftfeder einen Rollbalg aufweist, der an seinen Enden über jeweils einen Klemmring an einem zugeordneten Stützteil befestigt ist. Wirkt im Innenraum der Luftfeder kein Innendruck oder ist dieser wesentlich gegenüber den Normaldrücken im Fahrbetrieb herabgesetzt, beispielsweise wenn ein mit der Luftfeder ausgerüstetes Fahrzeug im Werkstattbetrieb an einen anderen Ort gefahren wird, können die dabei auftretenden Ein- und Ausfederungsbewegungen der Luftfeder eine unerwünschte Falte im Rollbalg insbesondere im Bereich eines Klemmringes bilden, wodurch der Rollbalg beschädigt werden kann.

Eine weitere Befestigung eines Luftfeder-Rollbalges ist in der DE 197 20 776 C1 beschrieben, bei der, um auch nach einem vollständigen Strecken des drucklosen Luftfederbalgs ein ordnungsgemäßes Abrollen zu gewährleisten, im Innern des Luftfederbalges mindestens ein diesen gegen den zwischen Kolbenboden und Kolbenmantel ausgebildeten Rand des Tauchkolbens drückendes Federelement angeordnet ist.

Der Erfindung liegt die Aufgabe zugrunde, eine Befestigung eines Luftfeder-Rollbalges mit den Merkmalen im Oberbegriff des Patentanspruches 1 anzugeben, die bei nicht wirkendem oder wesentlich herabgesetztem Innendruck im Innenraum der Luftfeder bei auftretenden Ein- und Ausfederungsbewegungen der Luftfeder die Bildung einer unerwünschten Falte im Rollbalg insbesondere im Bereich des Befestigungsmittels verhindert.

Diese Aufgabe ist durch die im Patentanspruch 1 angegebenen Merkmale gelöst. Vorteilhafte Ausgestaltungen der Erfindung sind den Unteransprüchen entnehmbar.

Das neben dem Befestigungsmittel zur Fixierung eines Endbereiches des Rollbalges an dem Stützteil zusätzlich verwendete Stützelement gibt einem Bereich des Rollbalges im Umgebungsbereich des Befestigungsmittels einen solchen Halt, daß sich bei nicht mehr wirkendem oder wesentlich herabgesetztem Innendruck in der Luftfeder bei Ein- und Ausfederungsbewegungen der Luftfeder beispielsweise im Werkstattbetrieb in dem Rollbalg keine unerwünschte Falte insbesondere im Umgebungsbereich des Befestigungsmittels bildet. Im Normalbetrieb bewirkt der Innendruck in der Luftfeder ausschließlich Zugkräfte im Rollbalg. Bei nicht wirkendem oder wesentlich herabgesetztem Innendruck können jedoch die Ein- und Ausfederungsbewegungen der Luftfeder im radial inneren bzw. äußeren Wandbereich des Rollbalges Druckkräfte insbesondere im Umgebungsbereich des Befestigungsmittels bewirken. Diese in axialer Richtung des Rollbalges wirkenden Druckkräfte können sich sofort oder nach einer kleinen elastischen Verformung eines Bereiches des Rollbalges an dem Stützelement abstützen, wodurch die Bildung einer unerwünschten Falte im Rollbalg verhindert ist. Im drucklosen bzw. weitgehend drucklosen Betrieb der Luftfeder kann beispielsweise ein damit ausgerüstetes Fahrzeug bei der Reparatur, Montage oder beim Rangieren Fahrbewegungen ausführen, bei denen Ein- und Ausfederungsbewegungen der Luftfeder den Rollbalg nicht beschädigen, wodurch ein Ausfall der Luftfeder vermieden ist und sich die Garantiekosten für die Luftfeder vermindern.

Ein Ausführungsbeispiel der Erfindung wird anhand einer Zeichnung näher erläutert. Es zeigen
- Figur 1: ein erstes Ausführungsbeispiel mit nicht montiertem Stützelement,
- Figur 2: eine Figur 1 entsprechende Schnittansicht mit einer unerwünschten Falte im Rollbalg,
- Figur 3: eine Figur 1 entsprechende Schnittansicht, mit nach einer Druckbeaufschlagung im Bereich einer unerwünschten Falte aneinandergepreßten Rollbalgwandungen und
- Figur 4: die in Figur 1 dargestellte Luftfeder mit montiertem Stützelement,

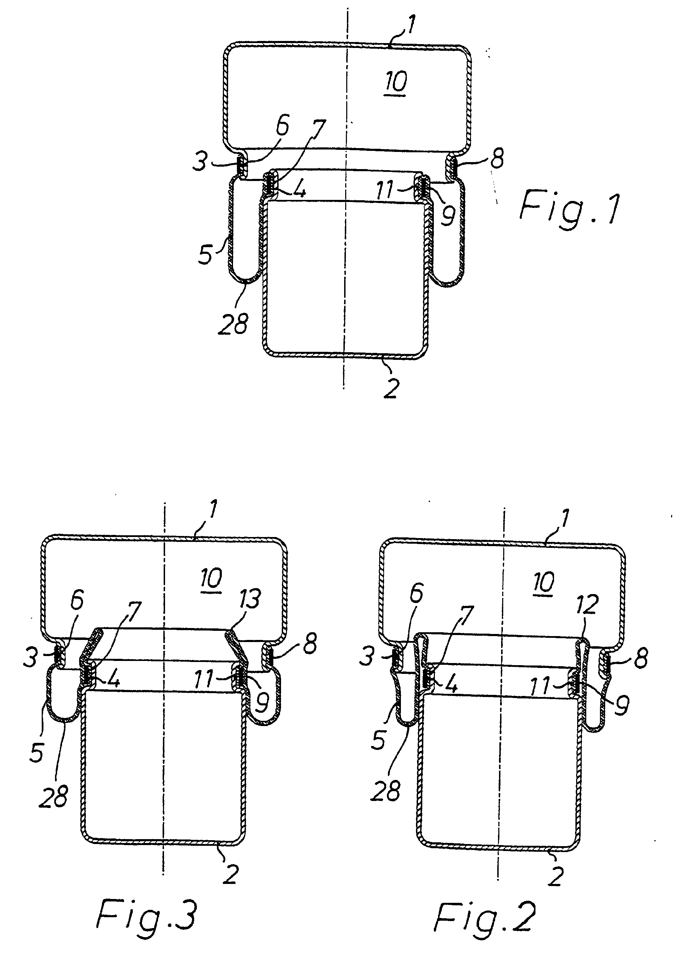

Die in Figur 1 gemäß einem ersten Ausführungsbeispiel in einem Längsschnitt ohne ein Stützelement vereinfacht dargestellte Luftfeder ist beispielsweise zwischen einem Radführungselement und dem Aufbau eines Kraftfahrzeugs angeordnet. Die Luftfeder weist ein oberes topfförmiges Abstützteil 1 und ein unteres topfförmiges Abstützteil 2 auf. An dem jeweils offenen Stirnbereich der topfförmigen Abstützteile 1 und 2 ist jeweils ein Endbereich 3, 4 eines um 180° eingerollten Rollbalges 5 befestigt. Der Boden des Abstützteiles 1 ist mit der Karosserie des Kraftfahrzeugs verbunden und der Boden des Abstützteiles 2 ist an einem Radführungselement oder Radträger befestigt. Die Stirnbereiche der Abstützteile 1 und 2 weisen einen radial verjüngten Absatz auf, in dem eine radiale Nut 6, 7 gebildet ist, in die jeweils ein zugeordneter Endbereich 3, 4 des Rollbalges 5 von einem Klemmring 8 bzw. 9 belastet ist. Der äußere Endbereich 3 umgreift an seinem in der Figur oberen Ende den Klemmring 8 etwas und ist dadurch bei den im Innenraum 10 der Luftfeder wirkenden Innendrücken zuverlässig in der Nut 6 festgehalten. Der radial innere Endbereich 4 des Rollbalges 5 ist an seinem in der Figur oberen Ende um 180 ° um den Klemmring 9 umgestülpt und zwischen dem Klemmring 9 und dem Boden 11 der radialen Nut 7 eingeklemmt.

Wie in Figur 2 dargestellt, können bei im Innenraum 10 nicht wirkendem oder wesentlich herabgesetztem Innendruck axiale Bewegungen der Luftfeder, beispielsweise im Werkstattbetrieb, Druckkräfte im Umgebungsbereich des Klemmringes 9 hervorrufen, die zu einer unerwünschten Falte 12 im Rollbalg 5 führen.

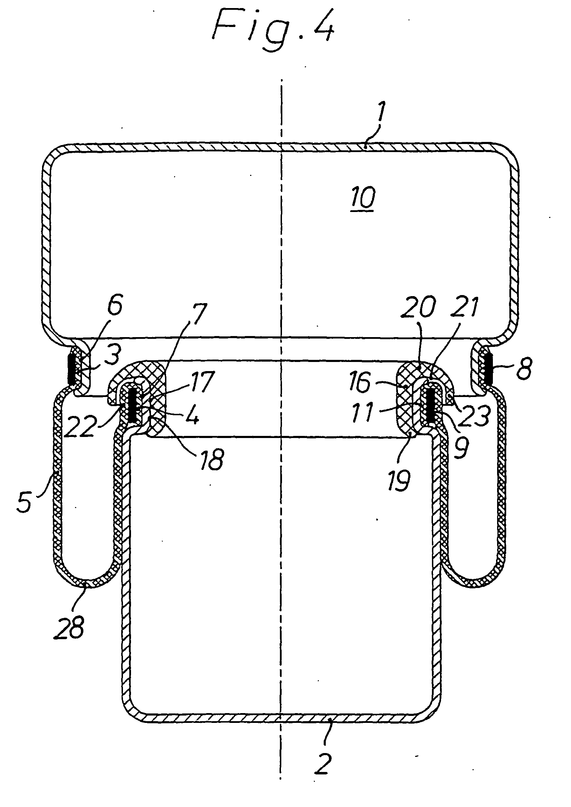

Wie Figur 3 zu entnehmen ist, können nach einer Druckbelastung des Innenraumes 10 die Rollbalgwandungen im Bereich der unerwünschten Falte 13 aneinandergepreßt werden, wodurch die Falte 13 beispielsweise einen in der Figur nach oben abnehmenden radialen Abstand zur Mittelachse der Luftfeder aufweist. Für ein axiales Verstellen der Luftfeder weist der Rollbalg 5 nun eine geringere Wandfläche auf. Nach einem an sich zulässigen axialen Ausfederungsweg der Luftfeder kann es nun vorkommen, daß der Rollbalg 5 im Bereich der Rollbalgkrümmung 28 in eine gestreckte Lage gelangt. Federt die Luftfeder weiter aus, werden die im Bereich der unerwünschten Falte 13 aneinander anliegenden Rollbalgwandungen bei einer entsprechenden Zugbelastung auseinandergezogen, wodurch der Rollbalg 5 beschädigt werden kann.

Um die unerwünschten Falten 12, 13 in den Figuren 2 und 3 zu vermeiden, ist bei dem in Figur 4 vollständig dargestellten Ausführungsbeispiel im Umgebungsbereich des Klemmringes 9 ein zusätzliches Stützelement vorgesehen, das durch eine Buchse 16 gebildet ist, die mit einem zylindrischen Bereich 17 die Innenöffnung 18 im offenen Randbereich des Abstützteiles 2 durchsetzt und mit einem in der Figur unteren Stirnbereich 19 axial hintergreift. Der Stirnbereich 19 kann beispielsweise durch eine plastische Verformung gebildet sein. Ebenso kann der Stirnbereich 19 radial elastisch ausgebildet sein, wodurch sich die Buchse 16 axial in die Innenöffnung 18 rastend einklipsen läßt. Ebenso sind auch andere Verfahren zum Verbinden der Buchse 16 mit dem Abstützteil 2 möglich. Die Buchse 16 weist an seinem aus dem Abstützteil 2 hervorstehenden Stirnbereich einen radial nach außen vorstehenden Kragen 20 auf, der eine axiale Stützfläche 21 bildet, an der sich ein Wandbereich 22 des inneren Endbereiches des Rollbalges 5 sofort oder nach einer kleinen elastischen Verformung des Rollbalges 5 axial abstützen kann, wenn bei Ein- oder Ausfederungsbewegungen der Luftfeder bei nicht wirkendem oder wesentlich herabgesetztem Innendruck im Innenraum 10 der Luftfeder, beispielsweise im Werkstattbetrieb, der Wandbereich 22 mit einer axial in das Innere des Rollbalges 5 gerichteten Druckkraft belastet ist. Wie der Figur weiterhin zu entnehmen ist, umgreift der radial vorstehende Kragen 20 mit seinem äußeren Randbereich 23 den Wandbereich 22 des Rollbalges 5 und stützt diesen auch radial, wodurch die Bildung einer unerwünschten Falte im Rollbalg 5 insbesondere im Umgebungsbereich des Klemmringes 9 vermieden ist.

Bei dem Ausführungsbeispiel wurde ein Stützelement verwendet, das im Bereich des radial inneren Befestigungselements einen Wandbereich des Rollbalges axial und eventuell zusätzlich bereichsweise radial stützt. Ebenso kann das Stützelement einen Wandbereich im Bereich des radial äußeren Befestigungselements stützen und dadurch die Bildung einer Falte im Rollbalg in diesem radial äußeren Bereich der Luftfeder verhindern. Der Endbereich des Rollbalges ist auch ohne Verwendung eines Klemmringes an dem betreffenden Stützteil zu befestigen. Das Stützelement kann unterschiedlich geformt sein und in einer von den Ausführungsbeispielen abweichenden Weise den bei abgefallenem Innendruck und entsprechenden Luftfederbewegungen druckbelasteten Wandbereich axial und eventuell radial stützen. Bei dem Ausführungsbeispiel ist die Luftfeder vereinfacht durch zwei Stützteile und einen dazwischen angeordneten Rollbalg bzw. zusätzlich durch seine Befestigungsmittel bzw. Stützelemente dargestellt. Ebenso kann das Stützteil auch durch andere feste oder nachgiebige Teile gebildet sein. Es ist auch möglich, daß ein Randbereich des Faltenbalges direkt an einem Bauteil, beispielsweise einer Fahrzeugwand befestigt ist. Bei Verwendung wenigstens eines Abstützteiles kann dieses von einem Dämpfer durchsetzt sein, der beispielsweise im Bereich einer Durchtrittsöffnung oder seiner Kolbenstange so ausgebildet ist, daß der Innenraum der Luftfeder nach außen abgedichtet bleibt. Die Luftfeder kann beliebig, beispielsweise an der Vorderachse oder an der Hinterachse eines Kraftfahrzeugs oder eines anderen Fahrzeugs verwendet sein. Ebenso ist es möglich, daß der Rollbalg über weitere Stützelemente radial von innen und/oder von außen gestützt ist.

## Patentansprüche

1. Befestigung eines Luftfeder-Rollbalges (5) an einem axialen Randbereich eines rohr- oder topfförmigen Stützteils (2), mit einem Befestigungsmittel, das einen radial nach innen oder außen eingerollten Endbereich des Rollbalges (5) an einer Umfangsfläche des Stützteiles (2) fixiert, wobei an dem Stützteil (2) ein Stützelement, ausgebildet als eine an einem Stirnbereich des Stützteiles (2) befestigte Buchse (16), befestigt ist, die im Umgebungsbereich des Befestigungsmittels (Klemmring 9) den Endbereich des Rollbalges (5) axial entgegen der durch den normalen Innendruck des Rollbalges (5) bewirkten Zugkraft stützt und **dadurch** bei axialen Bewegungen des Stützteiles (2) bei nicht wirkendem oder wesentlich abgesenktem Innendruck im Innenraum (10) der Luftfeder eine unerwünschte Faltenbildung im Umgebungsbereich des Befestigungsmittels (Klemmring 9) verhindert, und die mit einem radial nach außen oder nach innen vorstehenden Kragen (20) eine axiale Stützfläche (21) bildet, an der sich ein Wandbereich (22) eines Endbereiches des Rollbalges (5) sofort oder nach einer kleinen elastischen Verformung des Rollbalges 5 axial abstützen kann, wenn bei axialen Bewegungen des Stützteiles (2) bei nicht wirkendem oder wesentlich herabgesetztem Innendruck im Innenraum (10) der Luftfeder der Wandbereich (22) mit einer axial in den Innenraum (10) des Rollbalges (5) gerichteten Druckkraft belastet ist, **dadurch gekennzeichnet, dass** die Buchse (16) mit einem zylindrischen Bereich (17) eine Innenöffnung (18) im offenen Randbereich des Stützteils (2) durchsetzt und diese axial hintergreift.

2. Befestigung nach Anspruch 1, **dadurch gekennzeichnet, dass** ein Endbereich (4) des Rollbalges (5) entgegengesetzt zur Rollbalgkrümmung (28) axial nach außen umgestülpt und von dem Klemmring (9) radial gegen einen zylindrischen Bereich (Boden 11) des Stützteiles (2) belastet ist.

3. Befestigung nach Anspruch 2, **dadurch gekennzeichnet, daß** der zylindrische Bereich durch den Boden (11) einer radialen Nut (7) im Stützteil (2) gebildet ist.

4. Befestigung nach einem der Ansprüche 1 bis 3, **dadurch gekennzeichnet, daß** der radial vorstehende Kragen (20) an seinem radial vorstehenden Randbereich (23) den Wandbereich (22) des Rollbalges (5) umgreift und **dadurch** bereichsweise radial stützt.

## Claims

1. A fastening of air spring bellows (5) to an axial edge region of a tubular or pot-shaped support part (2), comprising a fastening means, which fixes a radially inwardly or outwardly rolled end region of the bellows (5) to a peripheral face of the support part (2), wherein a support element, configured as a bushing (16) fastened on an end region of the support part (2), is fastened to the support part (2), which bushing, in the surrounding region of the fastening means (clamping ring (9)), supports the end region of the bellows (5), axially counter to the tractive force caused by the normal internal pressure of the bellows (5) and thus, on axial movements of the support part (2), when the internal pressure is not effective or is substantially reduced in the interior (10) of the air spring, prevents an undesired fold formation in the surrounding region of the fastening means (clamping ring (9)), and which, with a radially outwardly or inwardly projecting collar (20), forms an axial support face (21), on which a wall region (22) of an end region of the bellows (5) can be axially supported immediately or after a small elastic deformation of the bellows (5), when, in the event of axial movements of the support part (2) when the internal pressure is not effective or substantially reduced in the interior (10) of the air spring, the wall region (22) is loaded with a pressure force directed axially into the interior (10) of the bellows (5), **characterised in that** the bushing (16) penetrates an inner opening (18) in the open edge region of the support part (2) with a cylindrical region (17) and engages axially behind it.

2. A fastening according to claim 1, **characterised in that** an end region (4) of the bellows (5) is turned over axially outwardly in the opposite direction to the bellows curvature (28) and is loaded radially toward a cylindrical region (base 11) of the support part (2) by the clamping ring (9).

3. A fastening according to claim 2, **characterised in that** the cylindrical region is formed by the base (11) of a radial groove (7) in the support part (2).

4. A fastening according to any one of claims 1 to 3, **characterised in that** the radially projecting collar (20), at its radially projecting edge region (23), encompasses the wall region (22) of the bellows (5) and thus radially supports it in regions.

## Revendications

1. Fixation d'un soufflet roulant d'amortisseur pneumatique (5) à une zone périphérique axiale d'une pièce de support (2) en forme de tube ou de pot, comprenant un moyen de fixation qui fixe une zone terminale du soufflet roulant (5) enroulée radialement vers l'intérieur ou vers l'extérieur à une surface périphérique de la pièce de support (2), un élément de support en forme de manchon (16) étant fixé à une zone frontale de la pièce de support (2) qui supporte axialement dans l'environnement du moyen de fixation (bague de serrage 9) la zone terminale du soufflet roulant (5) à l'encontre de la force de traction générée par la pression interne normale du soufflet roulant (5) et empêche ainsi la formation d'un pli indésirable dans l'environnement du moyen de fixation (bague de serrage 9) en présence de mouvements axiaux de la pièce de support (2) et d'une pression interne inefficace ou nettement réduite à l'intérieur (10) de l'amortisseur pneumatique, et qui par un collet (20) saillant radialement vers l'extérieur ou vers l'intérieur forme une surface de support axiale (21) sur laquelle peut s'appuyer une zone de paroi (22) d'une zone terminale du soufflet roulant (5) directement ou après une légère déformation élastique du soufflet roulant (5) si en présence de mouvements axiaux de la pièce de support (2) et d'une pression interne inefficace ou nettement réduite à l'intérieur (10) de l'amortisseur pneumatique la zone de paroi (22) est chargée par une force de pression orientée axialement dans l'intérieur (10) du soufflet roulant (5),
**caractérisée en ce que**
le manchon (16) traverse une ouverture intérieure (18) par une zone cylindrique (17) dans la zone périphérique ouverte de la pièce de support (2) et l'entoure axialement par derrière.

2. Fixation selon la revendication 1,
**caractérisée en ce qu'**
une zone terminale (4) du soufflet roulant (5) est pliée axialement vers l'extérieur à l'opposé de la courbure (28) du soufflet roulant et est chargée radialement par la bague de serrage (9) contre une zone cylindrique (fond 11) de la pièce de support (2).

3. Fixation selon la revendication 2,
**caractérisée en ce que**
la zone cylindrique est formée par le fond (11) d'une rainure radiale (7) dans la pièce de support (2).

4. Fixation selon l'une des revendications 1 à 3,
**caractérisée en ce que**
le collet (20) saillant radialement entoure, au niveau de sa zone périphérique (23) saillant radialement la zone de paroi (22) du soufflet roulant (5) et supporte ainsi radialement des parties de celle-ci.
